# EUROPEAN PATENT APPLICATION

(11) **EP 2 886 521 A1**
(43) Date of publication of application: **24.06.2015**
(21) Application number: 13198567.3
(22) Date of filing: 19.12.2013
(51) Int. Cl.: C03C 17/00, C03C 17/25

(54) **Development of nanostructured TiO2 thin films**

(71) Applicant: Rigas Tehniska universitate, 1658 Riga (LV)
(72) Inventor: Mezinskis, Gundars, 2137 Garkalne (LV); Vezenkova, Agneta, 3201 Talsi (LV)
(74) Representative: Fortuna, Jevgenijs

(57) **Abstract**

The invention relates to Fe₂O₃ and TiO₂-based nanostructured film preparation for photocatalytic application, in particular to methods for sol and dip-coating production by the use of non-aqueous sol-gel technology and limited access of light to the sol and film during their preparation. Photocatalytic TiO₂ film activity depends on TiO₂ anatase form, particles size, and shape. Greater photocatalytic activity of anatase nanoparticles shows submicron and rod-like nanoforms. Formation of nano-sized anatase nanoparticles and fibrous forms of nanoparticles is achieved by the use of Fe₂O₃ and TiO₂-based sol containing 1 - 5 mol% Fe₂O₃ and 99 - 95 mol% TiO₂. In order to separate the of TiO₂ nanoparticle crystallization nucleus formation from crystal growth and achieve monodisperse nanorod and nanoparticle crystallites formation, preparation of the sol, aging of the sol, and deposition of the film is carried out in the dark.

## Description

### Technical Field

The invention relates to obtaining Fe₂O₃ and TiO₂-based nanostructured films, in particular to methods for sol and dip-coating preparation by the use of non-aqueous sol-gel technology and limited access of light to the sol and film during their preparation.

### Background Art

There are known publications about the use of TiO₂ (basically in the polymorphic anatase form) photocatalytic materials for photodegradation of organic pollutants in order to achieve environment purification from organic compounds, viruses, bacteria, fungi etc. [1]. It was also found, that monotropic transformation anatase → rutile, as well as various forms of TiO₂ nanoparticle formation processes are affected by the initial particle size in a sol, - crystallization nucleus formation and growth processes.

A process for preparing of TiO₂ sol [2] is known, in the result of which monodisperse TiO₂ particles are obtained, having an average size less than or equal to 200 nm. According to this method primary (non-agglomerated) TiO₂ nanoparticles are obtained at a temperature of 70-95°C. The resulting sol is peptised by adding an acid catalyst that causes transformation of amorphous TiO₂ particles to anatase or rutile TiO₂ crystalline phases. Further follows removing of solvent by drying, vacuum drying, drying by freezing with subsequent re-dispersion in a suitable solvent, thus obtaining a sol, which mixing in a certain ratio with the siloxane resin, results in the thin film composition.

This method is feasible only through careful control of the reaction time, temperature, amounts of reagents added and drying parameters and is expensive due to the reagents and equipment used, as well as the method is time consuming. In addition, it is impossible to obtain rod-like nanoparticles on the surface of the coated substrate in the adjustable form and the crystallization of amorphous TiO₂ nanoparticles in a polymorphic phase of rutile TiO₂ is observed.

There is known a method of self-synthesizing, transparent and nanoporous thin film preparation for plastic or glass surfaces [3]. According to this known method the substrate is coated by barrier thin film, for the preparation of which water-methanol-SiO₂ nanoparticle sol is used. Water and methanol is removed by drying from 10 minutes to 1 hour at 80-200°C. Then the second layer of the thin film is applied, formed by the sol, being obtained according to the previously published method, in which TiO₂ thin films are sintered by the use of photo-sintering phenomenon [4] without additional treatment by high-temperature heat.

According to the method described in [3] and [4] it is impossible to consciously control monodisperse TiO₂ rod-like and sphere-like nanoparticles formation in the thin film due to UV irradiation causes the formation of aggregating TiO₂ nanoparticles, which size are in the range of 38-51 nm in diameter [4]. Formation of aggregating, poly disperse and large-sized TiO₂ particles in the thin film aggravates photocatalytic properties of these materials. In addition, this thin film preparation is time-consuming (5 days, according to [4]).

### Disclosure of the Invention

The aim of the invention is to cause the formation of monodisperse rod-like and sphere-like TiO₂ anatase form nanoparticles in the sol-gel film on the glass surface.

The goal is achieved by the method of dip-coating by the use of non-aqueous sol-gel technology and limited access of light to the sol and film during their preparation. Photocatalytic TiO₂ film activity depends on TiO₂ anatase form particles size and shape. Greater photocatalytic activity of anatase nanoparticles shows submicron and rod-like nanoforms. The formation of nano-sized anatase sphere-like nanoparticles and fibrous form particles is achieved by the use of Fe₂O₃ and TiO₂-based sol containing 1-5 mol% Fe₂O₃ and 99-95 mol% TiO₂. In order to separate the TiO₂ nanoparticle crystallization nucleus formation from crystal growth and achieve monodisperse nanorod and nanoparticle crystallites formation, the preparation of sol, the aging of sol, and deposition of the film is carried out in the dark (the preparation and the aging of sol, and deposition of the film is carried out during 2-72 hours).

### Brief Discription of Drawings

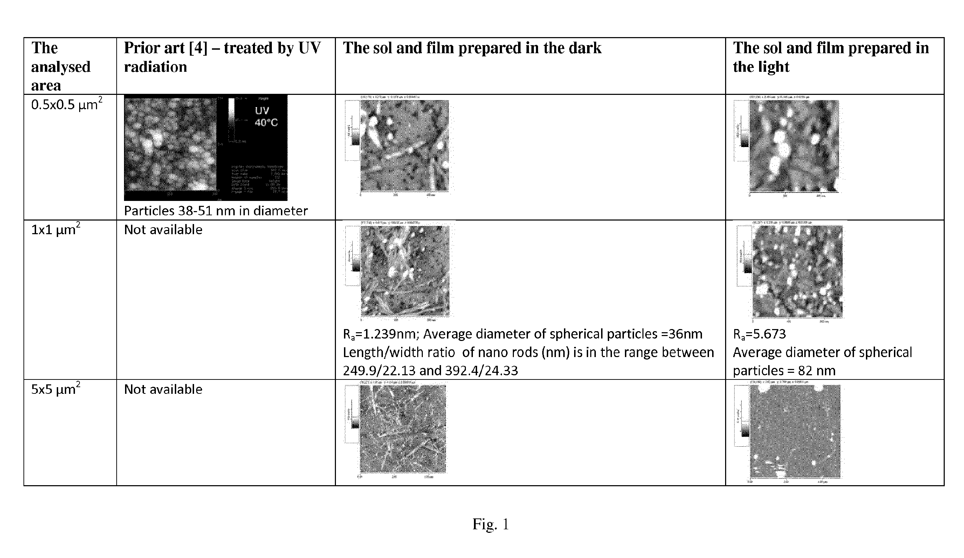

Fig. 1 shows the results of the comparative analysis of atomic force microscopy of the film according to [3, 4] and the preparation of sol and the proposed film in the dark and light for the sol composition with 5 mol% Fe₂O₃ and 95 mol% TiO₂, where the preparation of sol, the aging of sol and the deposition of film is carried out within 2 hours;

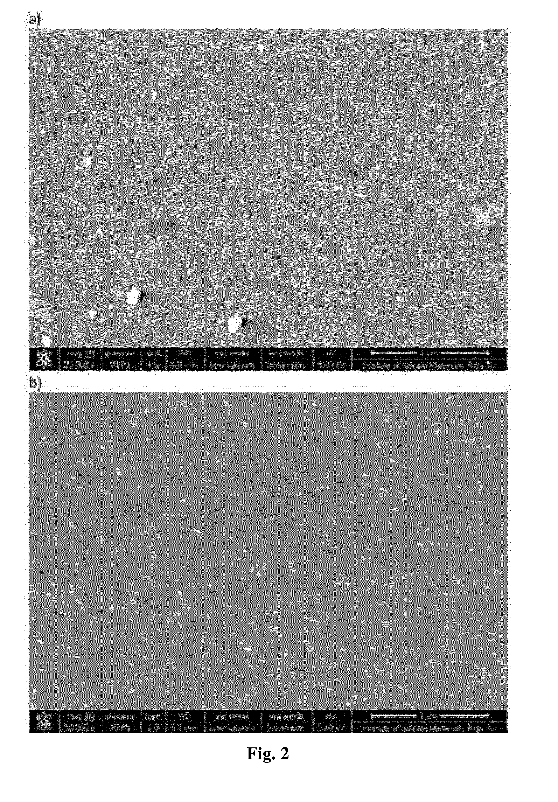

Fig. 2 - scanning electron microscopy high resolution images of samples synthesized according to the proposed invention (5 mol% Fe₂O₃ and 95 mol% TiO₂, where the preparation, the aging of sol, and deposition of the film is carried out within 2 hours): a) the sample synthesized in the light; b) the sample synthesized in the dark;

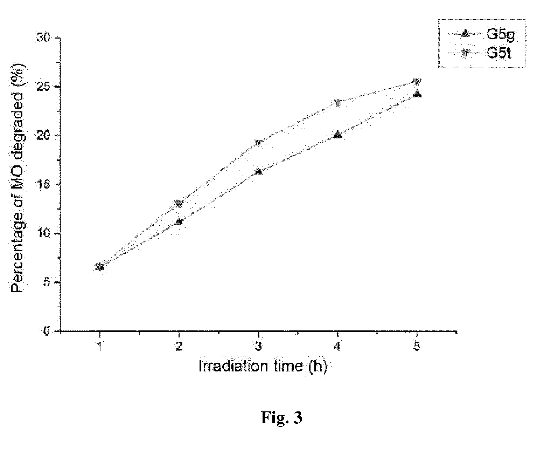

Fig. 3 - graphical representation of degradation of methyl orange by the use of Fe₂O₃-TiO₂ films (5 mol% Fe₂O₃ and 95 mol% TiO₂, where the preparation, aging of sol, and deposition of the film is carried out within 2 hours) and ultraviolet radiation: G5g - sol and the film is synthesized in the light; G5t - sol and the film is synthesized in the dark;

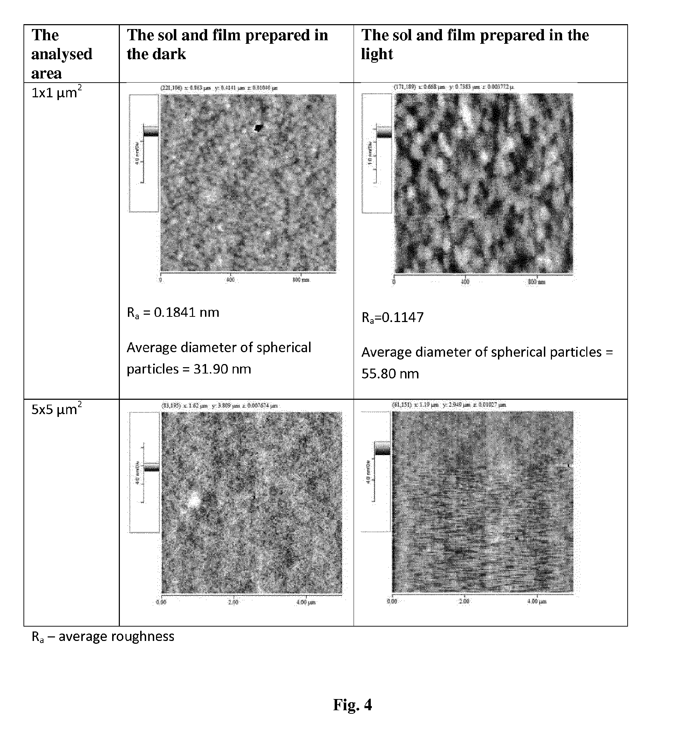

Fig. 4 - analysis results of atomic force microscopy for the film sol composition having 1 mol% Fe₂O₃ and 99 mol% TiO₂; the preparation, aging of sol and deposition of the film is carried out within 48 hours;

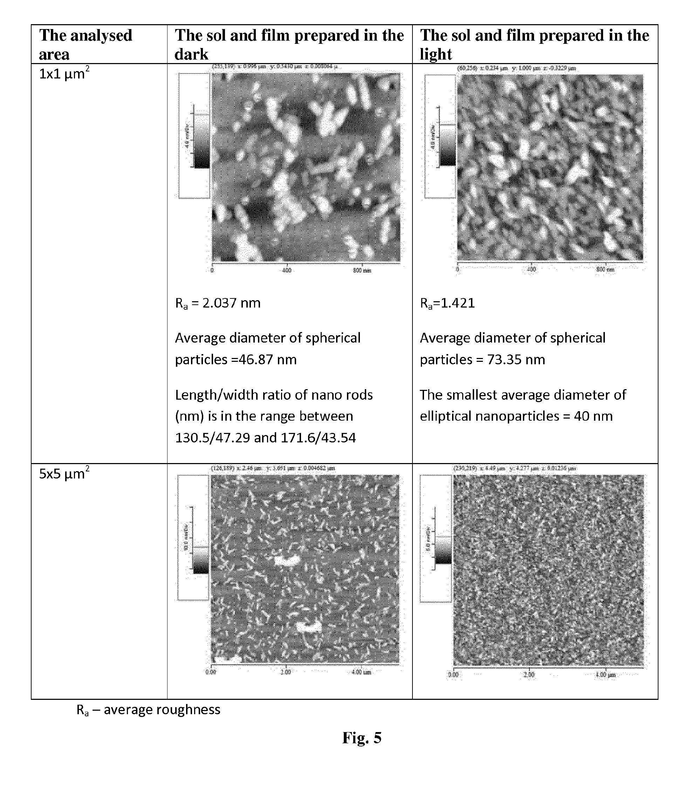

Fig. 5 - analysis results of atomic force microscopy for the film sol composition having 3 mol% Fe₂O₃ and 97 mol% TiO₂; the preparation, aging of sol and deposition of the film is carried out within 72 hours.

The proposed method is explained in more details by the following examples of implementation. The surface of the glass, which may be sodium-calcium silicate glass, SiO₂ glass, is prepared by washing in a detergent, rinsing in water, then it is scrubed with a wipe impregnated with CeO₂ alcohol suspension, rinsed in distilled H₂O, soaked for 5 minutes in 0,1N HNO₃ solution, rinsed with C₂H₅OH, rinsed with distilled H₂O, and dried for 24 h at 60°C.

Titanium (IV) tetraisopropoxide (in the amount that provides TiO₂ concentration in the resulting thin film from 95 to 99 mol%) and glacial acetic acid (titanium alkoxide modifier - chelating agent, in the molar ratio of titanium (IV) tetraisopropoxide : glacial acetic acid is 2: 1) is mixed using a magnetic stirrer and add isopropyl alcohol (in the molar ratio of titanium (IV) tetraisopropoxide : isopropyl alcohol 1:18), so obtaining sol A. Separately prepare a solution of trivalent ferrous hexahydrate FeCl₃x6H₂O (in the amount that provides 5 to 1 mol% Fe₂O₃ concentration in the resulting thin film) in ethylene glycol (sol B). Add the sol B to the sol A sol, resulting in sol C. Adding glycerol (in the molar ratio isopropyl alcohol : glycerol 0.71:0.01) to the sol C, resulting in sol D. The sol D is subjected to ultrasonic horn exposure (e.g. 15 min at an amplitude of 60%, frequency 1; the ultrasonic nozzle - MS 3 Micro Tip 3, the equipment- Ultrasonic Processor UP 50H, Dr. Hielscher GmbH) and immediately (or after aging of the sol) the dip-coating method, which is described in [5-7], is applied to the substrate to be coated. Preparation of the sol and dip-coating film deposition is carried out in the dark (the bowl for preparation of the sol and dip-coating equipment is covered with Al foil to minimize the access of light). After deposition of the film the substrate with the film is placed into electrical muffle furnace and fired at 500 °C, for 1 - 3 hours, with temperature increasing rate of 2 °C/min. Before measurements the resulting film is stored wrapped in Al foil and placed in a plastic bag, which in turn is placed in a desiccator.

As can be seen from Fig. 1, the proposed coating composition and the method for obtaining of the film, when compared to prior art solutions [3, 4], provides formation of monodisperse rod-like and sphere-like TiO₂ anatase forms in a sol-gel film on the glass surface. In its turn Fig. 2 clearly shows that the sample synthetized in the light (the negative example) is characterized by particle size polydispersity, but the sample synthetized in the dark is characterized by equally distributed monodisperse particles. In Fig. 3 a photocatalytic activity comparison of the samples, synthetized in the light and dark is given - the sample which is synthetized in the dark shows greater photocatalytic activity.

The results of atomic force microscopy studies presented in Fig. 4 and 5 shows, that samples synthetized in the dark have spherical particles with smaller diameter and nanorod particles accordingly.

### Sources of Information:

1. O. Carp, C.L. Huisman, A. Reller. Photoinduced reactivity of titanium dioxide. Progress in Solid State Chemistry 32 (2004) 33-177.
2. United States Patent Application No. US 2007/0151482 A 1. Jul.5, 2007.
3. United States Patent Application No. US 2010/0221513 A1. Sep.2, 2010.
4. Jeffrey R. S. Brownson, Tim J. Lee, Marc A. Anderson. Surface Re-Esterification and Photo Sintering of Titania Xerogel Thin Films. Chem. Mater. 2005, 17, 3025-3030.
5. C. J. Brinker, G. C. Frye, A. J. Hurd, C. S. Ashley. Fundamentals of Sol-Gel Dip Coating. Thin Solid Films, 201 (1991) 97-108.
6. S.M.Attia, Jue Wang, Guangming Wu, Jun Shen, Jiahua Ma. Review on Sol-Gel Derived Coatings: Process, Techniques and Optical Applications. J.Mater.Sci. Technol., 3, (2002) 211-218.
7. H. Schmidt, M. Mennig. Wet Coating Technologies for Glass. Sol-Gel Gateway : Short course on coatings.November 2000 http://www.solgel.com/articles/Nov00/menning.htm

## Claims

1. A photocatalytic sol-gel film on the glass-type substrate, **characterized in that** it contains monodisperse rod-like and sphere-like TiO₂ anatase form nanoparticles in a sol-gel containing, in mole percents: Fe₂O₃ from 1 to 5, TiO₂ from 99 to 95.

2. A method for obtaining photocatalytic sol-gel film on a glass-type substrate containing preparation of sol, aging the sol, deposition of sol-gel suspension in isopropyl alcohol on glass-type substrate, firing the substrate with film, **characterized in that** the sol-gel suspension in isopropyl alcohol contains Fe₂O₃ and TiO₂ in amounts, providing molar concentration in the resulting coating of 1 to 5 mol% Fe₂O₃ and 99 to 95 mol% TiO₂, as well as glacial acetic acid; wherein the preparation of sol, aging the sol and deposition of suspension is carried out in the dark.

3. The method according to claim 2, wherein molar ratio of titanium (IV) tetraisopropoxide : glacial acetic acid is 2:1.

4. The method according to claim 2 or 3, wherein glass-type substrate is sodium-calcium silicate glass or SiO₂ glass.

5. The method according to any of the preceding claims, wherein the total time for the preparation of the sol, aging of the sol and deposition of the suspension in the dark is in the range between 2 hours and 72 hours.

6. The method according to any preceding claims, wherein the sol-gel suspension in isopropyl alcohol further contains ethylene glycol and glycerol.

7. The method according to any preceding claims, wherein the sol-gel suspension in isopropyl alcohol prior to application is subjected to ultrasonic horn exposure.
